# EUROPÄISCHE PATENTSCHRIFT

(11) **EP 3 512 712 B1**
(45) Veröffentlichungstag und Bekanntmachung des Hinweises auf die Patenterteilung: **11.11.2020**
(21) Anmeldenummer: 17768677.1
(22) Anmeldetag: 12.09.2017
(51) Int. Cl.: B42D 25/30

(54) **KARTENFÖRMIGER DATENTRÄGER MIT OPTISCHEN MERKMALEN**
CARD-SHAPED DATA CARRIER WITH OPTICAL FEATURES
SUPPORT DE DONNÉES EN FORME DE CARTE COMPRENANT DES CARACTÉRISTIQUES OPTIQUES

(30) Priorität: 16.09.2016 DE 102016011220
(43) Veröffentlichungstag der Anmeldung: 24.07.2019
(73) Patentinhaber: Giesecke+Devrient Mobile Security GmbH, 81677 München (DE)
(72) Erfinder: RIEDL, Josef, 85395 Attenkirchen (DE); ENDRES, Günter, 81547 München (DE)
(86) Internationale Anmeldenummer: PCT/EP2017/001081
(87) Internationale Veröffentlichungsnummer: WO 2018/050281

(56) Entgegenhaltungen:
- DE-A1-102014 015 280
- DE-A1-102015 012 616

## Beschreibung

Die vorliegende Erfindung ist gerichtet auf einen kartenförmigen Datenträger mit optischen Merkmalen, welche es erlauben, dass der Datenträger vorzugsweise anhand von Leuchtmerkmalen beispielsweise in einem Geldbeutel besser erkannt wird. Zudem ist der vorgeschlagene kartenförmige Datenträger optisch besonders ansprechend. Die vorliegende Erfindung ist ferner gerichtet auf ein entsprechend eingerichtetes Verfahren zum Bereitstellen des kartenförmigen Datenträgers sowie auf ein Computerprogrammprodukt mit Steuerbefehlen, welche das vorgeschlagene Verfahren implementieren.

DE 10 2008 033 467 A1 zeigt einen kartenförmigen Datenträger mit mindestens einem Sicherheitsmerkmal, welches auf oder in mindestens einer Kantenfläche des Datenträgers auf- bzw. eingebracht ist. Das Sicherheitsmerkmal erstreckt sich hierbei über mindestens zwei Schichten des Kartenkörpers und weist eine Farbe auf.

EP 2 332 739 A1 zeigt ein Sicherheitsdokument, aufweisend mehrere Lamellen, die in unterschiedlichen Farben ausgestaltet sind.

EP 1 970 211 A1 zeigt ein Sicherheitsdokument, aufweisend eine Beschriftung an einer Kante des Kartenkörpers.

US 2014 0259838 A1 zeigt ein Sicherheitsdokument, aufweisend eine Struktur an einer Kantenfläche.

DE 10 2015 012 616 A1 offenbart einen kartenförmigen Datenträger nach dem Oberbegriff des Anspruchs 1.

Generell besteht ein Bedarf an optischen Variationen von Kreditkarten und Smartcards, allgemein auch als kartenförmige Datenträger bezeichnet. Diese optischen Variationen haben hierbei mehrere Verwendungen. Zum einen können Sicherheitsmerkmale mittels diesen optischen Anordnungen bzw. Ausgestaltungen implementiert werden, oder es soll einfach eine optisch ansprechende Karte geschaffen werden. Hierzu sind diverse Techniken bekannt, wie die Oberflächenstruktur solcher kartenförmigen Datenträger verändert werden kann. Hierbei sind insbesondere Druckverfahren bekannt, mit denen auch graphische Elemente auf dem Datenträger hinterlegt werden können.

Eine weitere Variation einer Kreditkarte bzw. einer Smartcard besteht darin, die Oberflächenstruktur derart anzupassen, dass neben einem optischen Effekt auch ein haptischer Effekt besteht. Hierzu ist es beispielsweise bekannt, eine Oberfläche eines kartenförmigen Datenträgers derart auszugestalten, dass sich eine Prägung ergibt. Diese Prägung kann beispielsweise eine Kreditkartennummer widerspiegeln. Wie bereits zitiert, ist es ferner bekannt, auch die Kartenkanten derart mit einem Relief zu versehen, dass diese optisch ansprechend sind und ferner einen haptischen Effekt aufweisen. Dieser haptische Effekt kann auch zu praktischen Verwendungszwecken eingesetzt werden, so dass ein direktes Betrachten der Karte nicht mehr notwendig ist. So können auch Menschen mit visueller Einschränkung zuverlässig eine solche Karte beispielsweise in ihrem Geldbeutel von weiteren Karten unterscheiden.

Besonders nachteilig bei bekannten Ausgestaltungen von Datenträgern ist es, dass typischerweise entweder optische oder haptische Elemente Einsatz finden, welche auch unter einem entsprechenden Blickwinkel bzw. bei einem bestimmten Umgebungslicht stets gleich wirken. So ist es mit herkömmlichen Verfahren nicht möglich, in Abhängigkeit beispielsweise eines Tageslichts eine optische Variation derart zu erzeugen, dass der optische Effekt in Abhängigkeit einer Lichtintensität entsteht. Hierzu sind lediglich spiegelnde Merkmale bekannt, wie beispielsweise ein Hologramm. Zwar verändert sich das optische Merkmal eines Hologramms in Abhängigkeit eines Blickwinkels, wobei jedoch keinerlei Lichteffekte, wie sie aus dem Tageslicht entstehen, berücksichtigt werden können. Somit besteht generell ein Bedarf, einen kartenförmigen Datenträger vorzuschlagen, der ein weiteres Sicherheitselement bzw. einfach nur ein optisch ansprechendes Element aufweist, welches in Abhängigkeit einer Leuchtintensität bzw. einer Lichtintensität einen besonderen optischen Effekt erzielt.

Demgemäß ist es eine Aufgabe, einen kartenförmigen Datenträger vorzuschlagen, welcher besonders gut wahrnehmbar ist und von anderen Datenträgern unterscheidbar ist. Ferner soll der vorgeschlagene Datenträger mit geringem technischem Aufwand herstellbar sein und dennoch aus einer Vielzahl von Datenträgern optisch herausstechen. Es ist ferner eine Aufgabe der vorliegenden Erfindung, ein entsprechendes Verfahren vorzuschlagen, welches es ermöglicht, den vorgeschlagenen kartenförmigen Datenträger bereitzustellen sowie ein Computerprogrammprodukt vorzuschlagen, mit Steuerbefehlen, welche das vorgeschlagene Verfahren implementieren.

Die Aufgabe wird gelöst durch einen kartenförmigen Datenträger gemäß den Merkmalen des Patentanspruchs 1. Weitere vorteilhafte Ausgestaltungen sind in den Unteransprüchen angegeben.

Demgemäß wird ein kartenförmiger Datenträger mit optischen Merkmalen zur verbesserten Wahrnehmung vorgeschlagen. Der Datenträger umfasst eine erste und eine zweite Deckschicht, wobei zwischen der ersten und der zweiten Deckschicht mindestens eine transluzente Innenschicht angeordnet ist, welche zumindest einen Teil einer Kartenkante ausformt.

So handelt es sich bei dem kartenförmigen Datenträger beispielsweise um eine Kreditkarte, eine Smartcard, ein Ausweisdokument, eine Bankkarte, ein Führerscheindokument oder ein ähnliches Kartenformat. Der kartenförmige Datenträger weist hierbei einen Kartenkörper auf, der eine Vorderseite und eine Rückseite aufweist sowie mindestens eine umlaufende Kartenkante. Hierbei ist es jedoch auch möglich, eine Kartenkante derart zu definieren, dass der kartenförmige Datenträger vier Kartenkanten aufweist. Somit wird die Dicke bzw. Stärke des kartenförmigen Datenträgers durch die Höhe der Kartenkante definiert. Bei dem optischen Merkmal handelt es sich vorzugsweise um ein Merkmal, welches mittels einer passiven oder aktiven Lichtquelle bereitgestellt wird. So kann beispielhaft Tageslicht als passive Lichtquelle derart herangezogen werden, dass das Tageslicht an mindestens einer Stelle in die Innenschicht des Kartenkörpers eintritt und an einer weiteren Stelle wieder austritt. Ferner ist es aber auch möglich, in dem Kartenkörper selbst ein aktives Leuchtmittel, beispielsweise ein LED, vorzusehen. Hierbei kann es sich auch beispielsweise um UV-Licht handeln.

Bei dem vorgeschlagenen Datenträger kann es sich um einen Datenträger mit schichtweise aufgebautem Kartenkörper handeln. Hierbei ist es vorgesehen, dass gemäß einem Aspekt der vorliegenden Erfindung mehrere Schichten bzw. Folien aufeinandergestapelt werden und miteinander verbunden werden. Dieses Verbinden kann beispielsweise mittels eines Heißlaminierens erfolgen. Die einzelnen Schichten können hierbei aus Kunststoff bzw. aus einer Kunststofffolie geformt werden. Typischerweise werden die Datenträger in großer Stückzahl bereitgestellt, und es werden hierbei einzelne Datenträger herausgestanzt bzw. generell vereinzelt. Hierbei kann es notwendig sein, in einem weiteren Verfahrensschritt den Datenträger nachzubearbeiten, derart, dass sich der erfindungsgemäße Vorteil einstellt. Beispielsweise sind ausgestanzte Karten im Nachhinein mindestens an den Kanten abzuschrägen bzw. zu prägen oder zu bedrucken.

Bei den Schichten handelt es sich um zwei sogenannte Deckschichten, auch als Overlay bezeichnet, die zumindest horizontal auf der Innenschicht aufliegen. Somit ergibt sich eine Schichtenabfolge, derart, dass eine Overlay-Schicht jeweils über und unter der Innenschicht angebracht ist. Hierbei ist es möglich, dass die Innenschicht zumindest an ihren Kanten vollumfänglich von außerhalb des Kartenkörpers sichtbar ist. Es ist jedoch auch möglich, dass die Innenschicht an den Kartenkanten zumindest teilweise bedeckt ist. Ein besonders gut wahrnehmbarer optischer Effekt ergibt sich bei Tageslicht dann, falls die Innenschicht umlaufend von außerhalb des Kartenkörpers sichtbar ist. Somit wird gewährleistet, dass möglichst viel Tageslicht bzw. generell Umgebungslicht in den Kartenkörper einfällt bzw. auch austreten kann. Somit ergibt sich bezüglich der weiteren Schichten des Kartenkörpers, beispielsweise der Deckschichten, ein optischer Effekt, der die Innenschicht optisch von den Deckschichten abhebt. So ist an der Kartenkante ein Leuchteffekt erkennbar.

Die Innenschicht ist hierbei transluzent ausgestaltet, d. h. also dass sie lichtdurchlässig ist. Hierzu ist es möglich, dass die Innenschicht transparent bzw. zumindest semitransparent ausgestaltet ist. Somit kann auch in Abhängigkeit der eingestellten Transluzenz variiert werden, wieviel Umgebungslicht in den Kartenkörper eindringt bzw. heraustritt.

Hierbei ist es besonders vorteilhaft, dass die Innenschicht lediglich an der Oberseite und der Unterseite von den Deckschichten bedeckt ist. Somit ergibt sich eine Kartenanordnung, wobei die Innenschicht in einer Seitenansicht des Kartenkörpers sichtbar ist. Dieser sichtbare Teil der Innenschicht ermöglicht es eben auch, dass Umgebungslicht ein- bzw. ausfällt.

Die vorliegende Erfindung ist gleichermaßen gerichtet auf einen Kartenkörper, der lediglich mittels passivem Licht, also Umgebungslicht, beleuchtet wird, oder aber auch eine aktive Lichtquelle aufweist. So ist es besonders ansprechend, dass beispielsweise bei einer aktiven Lichtquelle die erfindungsgemäß vorgeschlagene Kreditkarte bzw. allgemein der kartenförmige Datenträger, bereits in einem Geldbeutel erkennbar ist. So kann beispielsweise in einer Smartcard eine bestimmte Logik hinterlegt werden, die das verbaute Leuchtmittel anschaltet bzw. abschaltet. Somit ist es möglich, mittels der transluzenten Innenschicht in einem Zusammenwirken mit dem Leuchtmittel einen besonderen optischen Effekt, beispielsweise ein Blinken, bereitzustellen.

Ferner ist es möglich, dass der Kartenkörper weitere strukturelle Merkmale aufweist, die auch den ansonsten sichtbaren umlaufenden Teil der Innenschicht bedecken. So ist es erfindungsgemäß nicht ausgeschlossen, dass weitere gestalterische Merkmale in den Kartenkörper eingebracht bzw. an den Kartenkörper angebracht werden können. Diese weiteren strukturellen Merkmale können auch zumindest einen Teil der Kartenkante verdecken. Hierbei ist es jedoch bevorzugt, dass zumindest ein Teil der umlaufenden Kartenkante nicht bedeckt ist, derart, dass ein Leuchteffekt aus der Innenschicht des Kartenkörpers heraustreten kann.

Gemäß einem Aspekt der vorliegenden Erfindung ist die mindestens eine transluzente Innenschicht lichtleitend ausgestaltet. Dies hat den Vorteil, dass die Innenschicht nicht nur transluzent, also lichtdurchlässig, ausgestaltet ist, sondern vielmehr, dass strukturelle Merkmale vorgesehen werden können, die es begünstigen, dass Licht in den Kartenkörper bzw. die Innenschicht eintritt bzw. austritt. So ist es erfindungsgemäß möglich, dass, falls die Innenschicht eine längliche Strukturierung aufweist, diese so ausgestaltet wird, dass Licht tatsächlich auch geleitet wird und nicht nur von der Innenschicht durchgelassen wird. Somit stellt sich wiederum ein ästhetisch besonders ansprechender optischer Effekt ein, der auch als Sicherheitsmerkmal Verwendung finden kann. So kann das Material der Innenschicht nicht homogen ausgestaltet werden, was also keine gleichmäßige Lichtstreuung bewirkt, sondern vielmehr, dass das Licht in besonderer Weise geleitet wird und beispielsweise ein Muster ergibt.

Gemäß einem weiteren Aspekt der vorliegenden Erfindung weist die mindestens eine transluzente Innenschicht ein von außerhalb eines Kartenkörpers optisch wahrnehmbares Sicherheitsmerkmal auf. Dies hat den Vorteil, dass nicht nur eine ästhetisch ansprechende Kartenanordnung geschaffen wird, sondern vielmehr ist es möglich, einem Angreifer ein Nacharbeiten der vorgeschlagenen strukturellen Merkmale zu erschweren. So sind zwar generell Kartenrohlinge verfügbar, welche in weiteren Schritten einer bestehenden Kreditkarte angepasst werden können. Nicht bekannt ist es jedoch, die vorgeschlagene Anordnung bereitzustellen. Somit wird es einem Fälscher erschwert bzw. unmöglich gemacht, ausgehend von einem bestehenden Rohling die erfindungsgemäße Karte bereitzustellen.

Gemäß einem weiteren Aspekt der vorliegenden Erfindung ist die mindestens eine transluzente Innenschicht abgeschrägt. Dies hat den Vorteil, dass nicht nur ein weiteres Sicherheitselement geboten wird, sondern vielmehr ermöglicht die abgeschrägte Innenschicht ein haptisches Element sowie einen besonders ansprechenden optischen Effekt. Bei einer abgeschrägten Innenschicht kann es sich um eine Fase handeln, derart, dass also die Innenschicht abgefast wird. Bei einer solchen Fase handelt es sich um eine Schräge, die in die Innenschicht eingebracht wird. Somit wird das Licht auch entsprechend gebrochen, und es stellt sich wiederum ein optischer Effekt ein.

Gemäß einem weiteren Aspekt der vorliegenden Erfindung ragt die mindestens eine transluzente Innenschicht zwischen der ersten und der zweiten Deckschicht heraus. Dies hat den Vorteil, dass ein haptisches und optisches Merkmal derart bereitgestellt wird, dass die Fläche der Innenschicht größer ist als jeweils die Fläche der Deckschichten. Somit steht die Innenschicht zumindest an einem Ende zumindest teilweise aus den Deckschichten heraus. Dies ist insbesondere deshalb vorteilhaft, da der heraustretende Teil der Innenschicht aus dem Kartenkörper wiederum abgeschrägt bzw. mit einem Sicherheitsmerkmal versehen werden kann. Somit erhält der Benutzer eine neue Kartenform, die so nicht bekannt ist. Dies erhöht die Fälschungssicherheit gegenüber herkömmlichen kartenförmigen Datenträgern.

Gemäß einem weiteren Aspekt der vorliegenden Erfindung weist die mindestens eine transluzente Innenschicht eine Prägung, eine Gravur, einen Druck, eine Struktur und/oder ein Muster auf. Dies hat den Vorteil, dass die vorgeschlagenen Kennzeichnungen vorzugsweise umlaufend an die Stellen der Innenschicht angebracht werden können, die von außerhalb des Kartenkörpers sichtbar sind. Somit erfolgt eine Individualisierung des kartenförmigen Datenträgers derart, dass ein Schriftzug, ein Logo, eine Struktur oder ganz allgemein ein Muster an der Kartenkante bereitgestellt werden kann. So ist es beispielsweise möglich, ein Firmenlogo und/oder eine Beschriftung derart in die Innenschicht einzubringen, dass diese von außerhalb des Kartenkörpers sichtbar ist. Ein besonderer optischer Effekt ergibt sich, falls diese Kennzeichnung hintergrundbeleuchtet wird.
Gemäß einem weiteren Aspekt der vorliegenden Erfindung ist die mindestens eine transluzente Innenschicht zumindest teilweise farbig ausgestaltet. Dies hat den Vorteil, dass die transluzente Schicht zumindest teilweise derart pigmentiert ist, dass zwar Licht generell durch die Innenschicht hindurchtreten kann, dieses Licht aber eine gewisse Färbung erhält bzw. dass die Pigmente von der aktiven oder passiven Lichtquelle beleuchtet werden. Somit ergibt sich wiederum ein besonders ansprechender optischer Effekt, der es auch ermöglicht, Firmenfarben in die Innenschicht derart einzubringen, dass die Kreditkarte bzw. die Smartcard sofort eindeutig einer gewissen Marke zuzuordnen ist.

Gemäß einem weiteren Aspekt der vorliegenden Erfindung ist die mindestens eine transluzente Innenschicht in dem Kartenkörper derart angeordnet, dass in den Kartenkörper durch die mindestens eine transluzente Innenschicht eintretendes Licht durch diese wieder heraustreten kann. Dies hat den Vorteil, dass die Innenschicht bzw. weitere strukturelle Merkmale derart ausgeformt werden, dass mindestens an einer ersten Stelle Licht in den Kartenkörper eintreten kann und mindestens an einer zweiten Stelle eben dieses Licht wieder austreten kann. Bei der ersten und der zweiten Stelle kann es sich um zwei getrennte Stellen handeln, es kann sich aber auch um einen zusammenhängenden Bereich handeln, bei dem Licht sowohl ein- als auch austreten kann. So können Lichteinlässe bzw. Lichtauslässe wiederum derart gestaltet werden, dass sich ein gewünschtes Muster an der Oberfläche des Kartenkörpers bzw. an der Kartenkante ergibt. Wird beispielsweise Umgebungslicht als passive Lichtquelle genutzt, so ist es besonders vorteilhaft, dass die Innenschicht vollumlaufend von außerhalb des Kartenkörpers erkennbar ist. Somit wird bei Verwendung von Umgebungslicht bzw. Tageslicht der größtmögliche optische Effekt erzielt, da insbesondere der Lichteinlass besonders groß ausgestaltet ist.
Gemäß einem weiteren Aspekt der vorliegenden Erfindung weist der Kartenkörper ein aktives Leuchtmittel auf. Dies hat den Vorteil, dass das Leuchtmittel innerhalb des Kartenkörpers derart angeordnet werden kann, dass zumindest ein Teil des erzeugten Lichtes durch die transluzente Innenschicht aus dem Kartenkörper heraustritt. Somit besteht die Möglichkeit, dass das Leuchtmittel beispielsweise mittels einer elektronischen Komponente angesteuert wird und nach einem vorbestimmten Muster ein Leuchtsignal erzeugt. So kann der kartenförmige Datenträger als eine Smartcard vorliegen, welche einen Mikrocontroller aufweist, der an das Leuchtmittel gekoppelt ist. So kann beispielsweise in Abhängigkeit einer bestimmten Tageszeit oder eines bestimmten Datensignals ein Leuchtsignal erzeugt werden. Dieses Leuchtsignal wird dann in die Innenschicht eingespeist und tritt dann an der Kartenkante aus dem Kartenkörper heraus. So ist es beispielhaft möglich, dass, falls ein Benutzer den Kartenkörper in ein Lesegerät einführt und eine falsche PIN eingibt, die Kartenkante rot aufleuchtet. Generell kann das Leuchtmittel auch farbig ausgestaltet werden, derart, dass sich wiederum ein besonders ansprechender Lichteffekt einstellt.

Gemäß einem weiteren Aspekt der vorliegenden Erfindung liegt die mindestens eine transluzente Innenschicht als mindestens eine Folie vor. Dies hat den Vorteil, dass die Innenschicht ganz einfach innerhalb eines Folienstapels bereitgestellt werden kann und in einem Herstellungsprozess mit den weiteren Schichten zusammenlaminiert werden kann. So ist es auch möglich, die Innenschicht derart auszugestalten, dass mehrere transluzente Folien übereinandergelegt werden. Somit werden eben auch diese mehreren transluzenten Folien zusammenlaminiert und bilden in ihrer Gesamtheit die erfindungsgemäße Innenschicht.

Gemäß einem weiteren Aspekt der vorliegenden Erfindung weist die mindestens eine transluzente Innenschicht mindestens zwei sich in optischen Merkmalen unterscheidende Teilschichten auf. Dies hat den Vorteil, dass mittels einer Mischung von unterschiedlichen Teilschichten wiederum ein besonders ansprechender optischer Effekt erzeugt werden kann, der sich von bekannten Datenträgern unterscheidet. So ist es möglich, eine bestimmte Folge von Teilschichten bereitzustellen, die eine bestimmte Farbkombination vorsieht. Aus dieser Abfolge von farbigen Teilschichten ergibt sich dann insgesamt ein farbig leuchtender optischer Effekt, der aus dem Kartenkörper heraustritt.

Gemäß einem weiteren Aspekt der vorliegenden Erfindung weist die mindestens eine transluzente Innenschicht mindestens zwei sich in ihrer Fasengeometrie unterscheidende Teilschichten auf. Dies hat den Vorteil, dass mindestens ein Teil der Innenschicht, welcher aus den Deckschichten herausragt, in seiner Form gestaltet werden kann. So kann mittels der unterschiedlichen Geometrien ein optischer Effekt eingestellt werden, da sich das Licht an den unterschiedlichen Geometrien auch unterschiedlich bricht und/ oder es kann ein haptischer Effekt eingestellt werden, da die unterschiedlichen Geometrien ertastbar ausgestaltet sein können. Beispielsweise kann eine erste Fasengeometrie abgerundet ausgestaltet werden, und eine zweite Fasengeometrie kann eckig ausgestaltet werden. Zudem kann eine Teilschicht in einem ersten schrägen Winkel abgefast werden, und eine zweite Teilschicht in einem zweiten, unterschiedlichen Winkel schräg abgefast werden.

Gemäß einem weiteren Aspekt der vorliegenden Erfindung weist der Kartenkörper elektronische Komponenten auf. Dies hat den Vorteil, dass mittels der elektronischen Komponenten beispielsweise eine Smartcard realisiert werden kann. So ist es möglich, dass die elektronischen Komponenten zumindest teilweise in die Innenschicht eingebracht werden. Generell weist der vorgeschlagene kartenförmige Datenträger mehrere Schichten auf und ist bezüglich der vorgeschlagenen zwei Deckschichten und der Innenschicht nicht abschließend zu verstehen. So können weitere Schichten vorgesehen sein, welche im Zusammenwirken mit der Innenschicht die elektronischen Komponenten aufnehmen. Bei einer elektronischen Komponente kann es sich beispielsweise um einen Kartenspeicher oder einen Mikrocontroller handeln. Ferner sind weitere elektrische Komponenten vorzusehen, wie beispielsweise eine Induktionsspule. Die vorgeschlagenen elektronischen Komponenten können somit auch den optischen Effekt des Datenträgers insgesamt beeinflussen.

Die Aufgabe wird auch gelöst durch ein Verfahren nach Anspruch 13.

Erfindungsgemäß ist es besonders vorteilhaft, dass mit dem kartenförmigen Datenträger strukturelle Merkmale vorgeschlagen werden, welche mittels vorzusehenden Verfahrensschritten implementiert werden können. So können die strukturellen Merkmale auch bezüglich dem vorgeschlagenen Verfahren derart wiederverwendet werden, dass bezüglich jedem strukturellen Merkmal ein entsprechender Verfahrensschritt vorgeschlagen wird. Somit ist das vorgeschlagene Verfahren insgesamt eingerichtet, den vorgeschlagenen Datenträger in einer Ausführungsform oder einen Teil davon bereitzustellen. Die entsprechenden Verfahrensschritte können auch in einem Computerprogrammprodukt Niederschlag finden, wobei Steuerbefehle die entsprechenden Verfahrensschritte umsetzen.

Weitere vorteilhafte Ausgestaltungen werden anhand der beigefügten Figuren näher erläutert. Es zeigen:
- Fig. 1:: einen Querschnitt durch eine gestanzte Karte, aufweisend die vorgeschlagenen Schichten gemäß einem Aspekt der vorliegenden Erfindung;
- Fig. 2:: einen Querschnitt durch eine gestanzte, mit einer Fase versehenen Karte gemäß einem Aspekt der vorliegenden Erfindung;
- Fig. 3:: einen Querschnitt durch eine gestanzte, mit einer Fase versehenen Karte mit zwei Farben;
- Fig. 4.: einen Querschnitt durch eine gestanzte, mit einer Fase versehenen Karte und geänderter Fasengeometrie gemäß einem Aspekt der vorliegenden Erfindung; und
- Fig. 5:: ein Verfahren zum Bereitstellen der vorgeschlagenen Karte bzw. des kartenförmigen Datenträgers gemäß einem Aspekt der vorliegenden Erfindung.

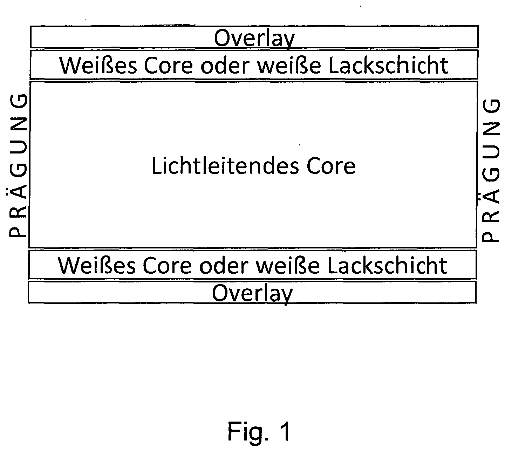

Fig. 1 zeigt oben und unten jeweils eine Deckschicht, welche als Overlay ausgestaltet ist. Hierbei formen die zwei Overlays das lichtleitende Core, also die Innenschicht, den Kartenkörper. Der Kartenkörper ist in seinem Querschnitt gezeigt, wobei in der vorliegenden Fig. 1 links und rechts ersichtlich ist, dass an die Innenschicht links und rechts eine Prägung angebracht ist. Bei der Prägung kann es sich auch generell um eine Struktur handeln, welche mechanisch eingebracht wird, beispielsweise mittels eines Druckverfahrens, unter Temperatureinwirkung oder per Laser. Vorliegend ist es möglich, dass in die Innenschicht links und rechts Licht sowohl eintritt als auch wieder heraustritt. Somit ergibt sich an der Kartenkante links und rechts ein besonders ästhetischer optischer Effekt. Hierbei sei insbesondere darauf hingewiesen, dass die vorliegende Figur lediglich schematisch zu verstehen ist und insbesondere, dass die Abmessungen eines kartenförmigen Datenträgers typischerweise derart vorliegen, dass die Stärke geringfügiger ausgestaltet ist, als es in der vorliegenden Fig. 1 gezeigt ist. Typischerweise ist der kartenförmige Datenträger also in seiner Proportion zur Länge dünner auszugestalten.

Generell wurden bisherige Kernmaterialien von Kartenkörpern nur mittels passiven Folienfarben verziert. Bei der Verwendung von lichtleitenden Folien gemäß der vorliegenden Erfindung erfolgt sowohl bei Tageslicht als auch bei Kunstlicht eine Einkopplung des Lichtes in das Core-Material und führt beim Austritt an den Kanten zu einer intensiveren Wahrnehmung der Kartenkanten. Eine zusätzliche Bestrahlung mit UV-Licht führt zu einer noch intensiveren Abstrahlung. Werden die Kanten dann auch noch mit einer Fase versehen, so erhöht sich die Abstrahlung abermals. Kombiniert man nun diese Kanten noch mit einer Prägung, wie es in der vorliegenden Fig. 1 gezeigt ist, so ist an jeder Kante der Prägung ein Licht-induzierter Übergang zu sehen. Somit wird eine Karte bereitgestellt, welche bezüglich ihrer Kartengestaltung bereits in einem Geldbeutel sofort erkennbar ist. Somit wird das vorgeschlagene erfindungsgemäße Merkmal der transluzenten Innenschicht wesentlich stärker wahrgenommen als bei sogenannten Colored-Core-Karten, und ein besonders ansprechender technischer Effekt ergibt sich insbesondere in Kombination mit angefasten Kartenkanten.

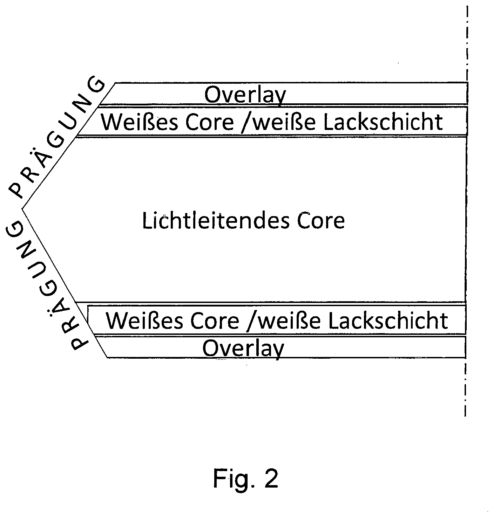

Fig. 2 zeigt den erfindungsgemäßen kartenförmigen Datenträger ebenfalls in einem Querschnitt, wobei die Innenschicht aus den beiden Deckschichten herausragt. Dieser herausragende Teil ist zusätzlich abgeschrägt und mit einer Prägung bzw. einer Struktur versehen. Hierdurch ergibt sich eine lichtleitende Kante, welche beidseitig, also von der Vorderseite und der Rückseite des Datenträgers, sichtbar ist. Insbesondere kann hierbei besonders einfach Licht in die Mittelschicht eindringen, auch wenn der kartenförmige Datenträger auf einer Oberfläche horizontal aufliegt. Die Abschrägung der Innenschicht, also des lichtleitenden Cores, wird generell auch als Fase bezeichnet.

Hierbei ist es möglich, dass die vorgeschlagene Karte aus einer großflächig hergestellten Schicht herausgestanzt wird und in weiteren Verfahrensschritten nachbearbeitet wird. So kann generell der Kartenkörper als solches aus einem Kartenbogen herausgestanzt werden, und in weiteren darauffolgenden Verfahrensschritten können die Kanten abgeschrägt werden. In wiederum darauffolgenden Verfahrensschritten kann die Prägung bzw. die Struktur eingebracht werden.

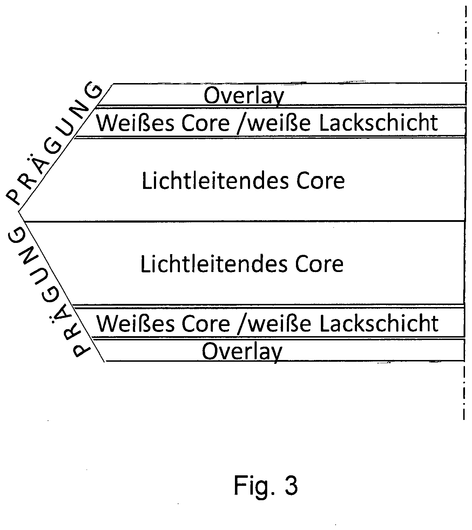

Fig. 3 zeigt den erfindungsgemäßen kartenförmigen Datenträger, wobei die Innenschicht als mehrere unterschiedliche Folien ausgestaltet ist. Im vorliegenden Beispiel sind zwei Folien vorgesehen, die eine invers zueinander ausgestaltete Geometrie aufweisen. So ist es ferner möglich, dass beide Schichten unterschiedliche Farbpigmente aufweisen. So stellen beide Teilschichten eine bestimmte Mischfarbe bereit, die aus dem Kartenkörper herausleuchtet. Hierbei kann es notwendig sein, weitere Schichten innerhalb des Kartenkörpers vorzusehen. Auch stellt sich der optische Effekt ein, dass die herausragende Fläche der Innenschicht von der Oberseite und der Unterseite jeweils eine andere Farbgebung aufweist.

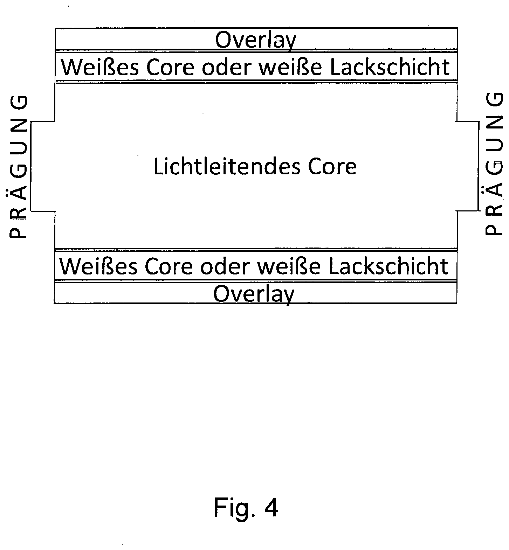

Fig. 4 zeigt eine Ausgestaltung der erfindungsgemäßen Innenschicht, wobei die Fasengeometrie derart geändert ist, dass die Innenschicht bzw. mehrere Innenschichten nicht abgeschrägt sind, sondern stufenweise ausgestaltet sind. Generell ist dieses Beispiel jedoch nicht einschränkend zu versehen, und der Fachmann erkennt hierbei, dass er erfindungsgemäß unterschiedliche Geometrien anwenden kann. So können insbesondere Rundungen, Stufenformen oder dergleichen mehr Anwendung finden. Insbesondere ist es möglich, auf der in der vorliegenden Fig. 4 linken Seite eine andere Geometrie anzuwenden als auf der rechten Seite. Insbesondere kann die Fasengeometrie an einen gewünschten haptischen Effekt derart angepasst werden, dass eine bestimmte Oberflächenstruktur bereitgestellt wird. Hierzu kann z. B. eine Orientierung des kartenförmigen Datenträgers haptisch angezeigt werden.

Gemäß bekannter Verfahren werden bisher bei Karten mit farbigem Kern farbige Folien verwendet, ohne dass das Umgebungslicht für eine intensivere Wahrnehmung der farbigen Kante genutzt wird. Erfindungsgemäß hingegen wird im Kartenkern eine farbige und lichtleitende Folie angeordnet, um das Umgebungslicht für eine bessere Wahrnehmung des farbigen Kerns beim Austritt des Lichts aus der Folie zu nutzen. UV-Licht verstärkt die Wahrnehmung. Zusätzlich wird die Kartenkante angefast, was eine bessere Wahrnehmung aus einer bestimmten Richtung ermöglicht. Ferner kann die Kartenkante mit einer Prägung versehen werden.

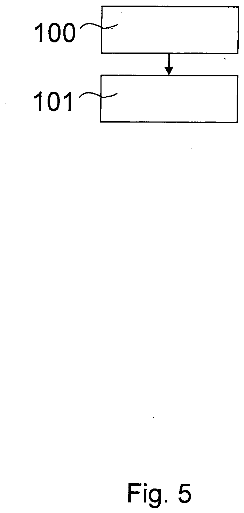

Fig. 5 zeigt ein Verfahren zum Herstellen eines kartenförmigen Datenträgers, aufweisend ein Bereitstellen 100 einer ersten und einer zweiten Deckschicht, wobei zwischen der ersten und der zweiten Deckschicht mindestens eine transluzente Innenschicht angeordnet 101 wird, welche zumindest einen Teil einer Kartenkante ausformt. Der Fachmann erkennt hierbei, dass weitere Teilschritte notwendig sein können.

## Patentansprüche

1. Kartenförmiger Datenträger mit optischen Merkmalen zur verbesserten Wahrnehmung, aufweisend:
eine erste und eine zweite Deckschicht, wobei zwischen der ersten und der zweiten Deckschicht mindestens eine transluzente Innenschicht angeordnet ist, welche zumindest einen Teil einer Kartenkante ausformt,
**dadurch gekennzeichnet, dass** die mindestens eine transluzente Innenschicht abgeschrägt ist.

2. Datenträger nach Anspruch 1, **dadurch gekennzeichnet, dass** die mindestens eine transluzente Innenschicht lichtleitend ausgestaltet ist.+

3. Datenträger nach Anspruch 1 oder 2, **dadurch gekennzeichnet, dass** die mindestens eine transluzente Innenschicht ein von außerhalb eines Kartenkörpers optisch wahrnehmbares Sicherheitsmerkmal aufweist.

4. Datenträger nach einem der vorhergehenden Ansprüche, **dadurch gekennzeichnet, dass** die mindestens eine transluzente Innenschicht zwischen der ersten und der zweiten Deckschicht herausragt.

5. Datenträger nach einem der vorhergehenden Ansprüche, **dadurch gekennzeichnet, dass** die mindestens eine transluzente Innenschicht eine Prägung, eine Gravur, einen Druck, eine Struktur und/ oder ein Muster aufweist.

6. Datenträger nach einem der vorhergehenden Ansprüche, **dadurch gekennzeichnet, dass** die mindestens eine transluzente Innenschicht zumindest teilweise farbig ausgestaltet ist.

7. Datenträger nach einem der vorhergehenden Ansprüche, **dadurch gekennzeichnet, dass** die mindestens eine transluzente Innenschicht in dem Kartenkörper derart angeordnet ist, dass in den Kartenkörper durch die mindestens eine transluzente Innenschicht eintretendes Licht durch diese wieder heraustreten kann.

8. Datenträger nach einem der vorhergehenden Ansprüche, **dadurch gekennzeichnet, dass** der Kartenkörper ein aktives Leuchtmittel aufweist.

9. Datenträger nach einem der vorhergehenden Ansprüche, **dadurch gekennzeichnet, dass** die mindestens eine transluzente Innenschicht als mindestens eine Folie vorliegt.

10. Datenträger nach einem der vorhergehenden Ansprüche, **dadurch gekennzeichnet, dass** die mindestens eine transluzente Innenschicht mindestens zwei sich in optischen Merkmalen unterscheidende Teilschichten aufweist.

11. Datenträger nach einem der vorhergehenden Ansprüche, **dadurch gekennzeichnet, dass** die mindestens eine transluzente Innenschicht mindestens zwei sich in ihrer Fasengeometrie unterscheidende Teilschichten aufweist.

12. Datenträger nach einem der vorhergehenden Ansprüche, **dadurch gekennzeichnet, dass** der Kartenkörper elektronische Komponenten aufweist.

13. Verfahren zum Herstellen eines kartenförmiger Datenträgers mit optischen Merkmalen zur verbesserten Wahrnehmung, aufweisend:
Bereitstellen (100) einer ersten und einer zweiten Deckschicht, **dadurch gekennzeichnet, dass**
zwischen der ersten und der zweiten Deckschicht mindestens eine transluzente Innenschicht angeordnet (101) wird, welche zumindest einen Teil einer Kartenkante ausformt, wobei die mindestens eine transluzente Innenschicht abgeschrägt ist.

## Claims

1. A card-shaped data carrier having optical features for improved perception, comprising:
a first and a second cover layer, wherein
between the first and the second cover layer there is disposed at least one translucent inner layer which forms at least a part of a card edge,
**characterized in that** the at least one translucent inner layer is bevelled

2. The data carrier according to claim 1, **characterized in that** the at least one translucent inner layer is configured light-conducting.

3. The data carrier according to either of claims 1 or 2, **characterized in that** the at least one translucent inner layer has a security feature which is optically perceptible from outside a card body.

4. The data carrier according to any of the preceding claims, **characterized in that** the at least one translucent inner layer protrudes from between the first and the second cover layer.

5. The data carrier according to any of the preceding claims, **characterized in that** the at least one translucent inner layer has an embossing, an engraving, a print, a structure and/or a pattern.

6. The data carrier according to any of the preceding claims, **characterized in that** the at least one translucent inner layer is configured at least partially colored.

7. The data carrier according to any of the preceding claims, **characterized in that** the at least one translucent inner layer is disposed in the card body in such a way that light entering the card body through the at least one translucent inner layer can also exit through this.

8. The data carrier according to any of the preceding claims, **characterized in that** the card body has an active illuminant.

9. The data carrier according to any of the preceding claims, **characterized in that** the at least one translucent inner layer is present as at least one foil.

10. The data carrier according to any of the preceding claims, **characterized in that** the at least one translucent inner layer has at least two partial layers which differ in optical features.

11. The data carrier according to any of the preceding claims, **characterized in that** the at least one translucent inner layer has at least two partial layers which differ in their chamfer geometry.

12. The data carrier according to any of the preceding claims, **characterized in that** the card body has electronic components.

13. A method for producing a card-shaped data carrier having optical features for improved perception, comprising:
supplying (100) a first and a second cover layer, **characterized in that**
between the first and the second cover layer there is disposed (101) at least one translucent inner layer which forms at least a part of a card edge, wherein the at least one translucent inner layer is bevelled.

## Revendications

1. Support de données en forme de carte doté de caractéristiques optiques pour une perception améliorée, comportant :
une première et une deuxième couche de recouvrement, cependant que,
entre la première et la deuxième couche de recouvrement, au moins une couche intérieure translucide est agencée, laquelle forme au moins une partie d'un bord de carte,
**caractérisé en ce que** la au moins une couche intérieure translucide est biseautée.

2. Support de données selon la revendication 1, **caractérisé en ce que** la au moins une couche intérieure translucide est réalisée sous forme conduisant la lumière.

3. Support de données selon la revendication 1 ou 2, **caractérisé en ce que** la au moins une couche intérieure translucide comporte une caractéristique de sécurité optiquement perceptible depuis l'extérieur d'un corps de carte.

4. Support de données selon une des revendications précédentes, **caractérisé en ce que** la au moins une couche intérieure translucide fait saillie entre la première et la deuxième couche de recouvrement.

5. Support de données selon une des revendications précédentes, **caractérisé en ce que** la au moins une couche intérieure translucide comporte une gravure, un gaufrage, une impression, une structure et/ou un motif.

6. Support de données selon une des revendications précédentes, **caractérisé en ce que** la au moins une couche intérieure translucide est au moins partiellement réalisée de manière colorée.

7. Support de données selon une des revendications précédentes, **caractérisé en ce que** la au moins une couche intérieure translucide est agencée de telle façon dans le corps de carte que de la lumière entrant dans le corps de carte par la au moins une couche intérieure translucide peut à nouveau ressortir par cette dernière.

8. Support de données selon une des revendications précédentes, **caractérisé en ce que** le corps de carte comporte un agent lumineux actif.

9. Support de données selon une des revendications précédentes, **caractérisé en ce que** la au moins une couche intérieure translucide se trouve sous forme d'au moins une feuille.

10. Support de données selon une des revendications précédentes, **caractérisé en ce que** la au moins une couche intérieure translucide comporte au moins deux couches partielles se différenciant en caractéristiques optiques.

11. Support de données selon une des revendications précédentes, **caractérisé en ce que** la au moins une couche intérieure translucide comporte au moins deux couches partielles se différenciant en leur géométrie de chanfrein.

12. Support de données selon une des revendications précédentes, **caractérisé en ce que** le corps de carte comporte des composants électroniques.

13. Procédé de fabrication d'un support de données en forme de carte doté de caractéristiques optiques pour une perception améliorée, comportant :
mise à disposition (100) d'une première et d'une deuxième couche de recouvrement, **caractérisé en ce que**
entre la première et la deuxième couche de recouvrement, au moins une couche intérieure translucide est agencée (101), laquelle forme au moins une partie d'un bord de carte, cependant que la au moins une couche intérieure translucide est biseautée.
